# EUROPEAN PATENT SPECIFICATION

(11) **EP 1 197 506 B1**
(45) Date of publication and mention of the grant of the patent: **25.01.2006**
(21) Application number: 01123382.2
(22) Date of filing: 11.10.2001
(51) Int. Cl.: C08G 18/20, C09D 175/04

(54) **Catalyst for production of a two component polyurethane sealant**
Katalysator zur Herstellung von einer Zwei-Komponenten Polyurethandichtungsmasse
Catalysateur pour la préparation d'une composition de scellement à deux composants à base polyuréthane

(30) Priority: 13.10.2000 JP 2000318246
(43) Date of publication of application: 17.04.2002
(73) Proprietor: TOSOH CORPORATION, Shinnanyo-shi, Yamaguchi-ken, 746-8501 (JP)
(72) Inventor: Kometani, Hiroyuki, Shinnanyo-shi, Yamaguchi-ken (JP); Tamano, Yutaka, Tokuyama-shi, Yamaguchi-ken (JP)
(74) Representative: Pautex Schneider, Nicole Véronique

(56) References cited:
- EP-A- 0 284 015
- US-A- 3 769 244
- US-A- 4 032 479
- US-A- 4 144 221
- US-A- 4 211 676
- US-A- 4 496 706
- US-A- 4 515 933
- US-A- 5 317 034
- PATENT ABSTRACTS OF JAPAN vol. 1999, no. 05, 31 May 1999 (1999-05-31) & JP 11 035918 A (NIPPON POLYURETHANE IND CO LTD), 9 February 1999 (1999-02-09)

## Description

The present invention relates to a catalyst useful for the production of a two component polyurethane sealant, which comprises a salt of a tertiary amine having a special structure and a specific acid. Further, the present invention relates to a method for producing a two component polyurethane sealant, which comprises reacting a polyol with an organic polyisocyanate and/or a isocyanate prepolymer in the presence of such a catalyst and, if necessary, a zeolite, a foam stabilizer, a cross-linking agent, etc.

In recent years, demands for elastic sealants have been expanded in a wide range of industrial fields such as civil engineering, architecture, automobiles and communication. As types of sealants, various types are available such as a silicone type, a modified silicone type, a polysulfide type, an acrylurethane type, a SBR type, a butyl rubber type and a urethane type. Among them, urethane type sealing materials have become to constitute about 50% of the total demand of elastic sealants in Japan, for such reasons that urethane type sealing materials may be variously changed in their performance, or they are inexpensive as compared with other elastic sealants.

A urethane type sealant is formed by a reaction of a polyisocyanate component with a polyol component and shows urethane bonds, whereby it shows excellent rubber elasticity. Both components have various types, whereby various physical properties can be obtained depending upon the particular purposes, and thus, it is a material useful as a sealant.

Sealants may be classified into one component type and two component type. In the case of a urethane type sealant, one component type is mainly a moisture curable type, and its bonds include urea bonds as well as urethane bonds. On the other hand, a two component urethane sealant is a polyol-curable type, and its bonds are mainly urethane bonds. As compared with the one component type, the two component type is excellent in the curing property and the dynamic follow-up property before curing and in the dynamic follow-up property, the adhesive property, etc., after curing, and the two component type is produced in a larger amount. Its applications cover a wide range including bonding of cement, tiles, etc., sealing of cladding panels, sealing of concrete walls, sealing of drainage or transport pipes. underground tanks, highways, runways, etc.

Heretofore, when a urethane sealing material is to be used, from the viewpoint of operation efficiency, it has been desired to prolong the pot life as far as possible and to obtain a rapid viscosity increase. In other words, it has been desired that the initial low viscosity state is maintained for a prescribed period of time, and upon expiration of the prescribed period of time, the viscosity quickly increases to complete the curing. If the pot life is short, or if the viscosity increase starts before the prescribed pot life, it tends to be difficult to let the sealing material flow or fill sufficiently to every corner, whereby the product tends to have defects. Further, if a rapid viscosity increase does not take place after expiration of the pot life, and the viscosity increase proceeds slowly, finishing of the product will be delayed, and the productivity will decrease substantially. It is common to control the pot life or the viscosity increase by means of a catalyst as a curing accelerator. As the catalyst, it has been proposed to use an amine catalyst or a heavy metal catalyst such as lead or mercury, and such a catalyst is actually used.

However, with the above catalyst which is presently used, many problems have been pointed out. For example, with the mercury catalyst, a long pot life and a rapid viscosity increase can be attained, but its toxicity is very high, and its use is voluntarily refrained in Japan. Also in U.S.A. and Europe where the mercury catalyst is used, its toxicity is worried as a matter of course, and a substitute catalyst is very much desired.

As a substitute for the mercury catalyst, a lead catalyst is used in many cases. However, when the lead catalyst is used, the rapidness in the viscosity increase tends to be lost more or less. Further, it is well known that the toxicity of the lead catalyst is high although not as high as the mercury catalyst, and a substitute catalyst is strongly desired.

As a substitute for such heavy metal catalysts, it has been proposed to use an amine catalyst. However, with a usual amine catalyst such as triethylenediamine or pentamethyldiethyltriamine, the viscosity increase starts to take place simultaneously when the material is mixed, whereby it is difficult to obtain a sufficiently long pot life.

JP-A-64-20287 discloses a case wherein 1,8-diazabicyclo(5,4,0)undecene-7 (hereinafter referred to simply as DBU) which is one of bicyclic tertiary amine catalysts, is used as a catalyst. However, with DBU alone, the stability in the system is low, and it is difficult to obtain a sufficiently long pot life. In the publication, it is also disclosed to use a reaction product of DBU with phenol, sulfonic acid, sulfide, sulfamide, phosphoric acid, an N-sulfonylcarboxyamide having a total of from 2 to 36 carbon atoms or a carboxylic acid having from 2 to 18 carbon atoms. However, even if, for example, a reaction product of DBU with p-toluenesulfonic acid, is used as a catalyst, it is difficult to simultaneously satisfy the required long pot life and the rapid viscosity increase.

As described in the foregoing, for a urethane type two component sealing material, a catalyst having a low toxicity has been desired which is capable of satisfying both the long pot life and the rapid viscosity increase.

Under the above-mentioned circumstances, the present inventors have conducted an extensive research for a catalyst for polyurethane reaction which satisfies both the effective long pot life and the rapid viscosity increase, and as a result, have found that a salt of a bicyclic tertiary amine compound with an aliphatic monocarboxylic acid having at least one unsaturated bond in its molecule, is very effective to satisfy both the long pot life and the rapid viscosity increase, and it has a low toxicity. On the basis of this discovery, the present invention has been accomplished.

Namely, the present invention provides a catalyst for production of a two component polyurethane sealant, which comprises a salt of a bicyclic tertiary amine of the following formula (1): 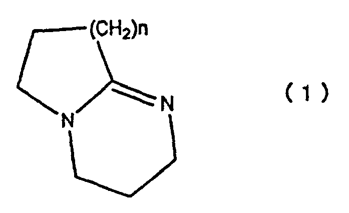
wherein n is an integer of from 1 to 3, with an aliphatic monocarboxylic acid having at least one unsaturated bond in its molecule selected from the group consisting of methacrylic acid, crotonic acid and tiglic acids wherein the blend ratio is adjusted so that the molar ratio of the bicyclic tertiary amine/the aliphatic monocarboxylic acid will be at most 1.3, and a method for producing a two component polyurethane sealant by means of such a catalyst. The catalyst of the present invention has a low toxicity and is very effective for satisfying both the long pot life and the rapid viscosity increase.

Now, the present invention will be described in detail with reference to the preferred embodiments.

The catalyst of the present invention comprises a salt of a bicyclic tertiary amine of the above formula (1) with an aliphatic monocarboxylic acid having at least one unsaturated bond in its molecule selected from the group consisting of methacrylic acid, crotonic acid and tiglic acids.

In the present invention, the bicyclic tertiary amine of the above formula (1) is not particularly limited, and it may, for example, be 1,5-diaza-bicyclo(4,3,0)nonene-5 (hereinafter referred to as DBN), 1,5-diaza-bicyclo(4,4,0)decene-5 (hereinafter referred to as DBD) or DBU. Among them, DBU and DBN are preferred. Particularly preferred is DBU. Such bicyclic tertiary amines may be used alone, or two or more.of them may be used in combination.

If a tertiary amine such as triethylenediamine or pentamethyldiethylenetriamine other than the bicyclic tertiary amine of the above formula (1), is employed, the viscosity increase starts immediately when a starting material is mixed, and the viscosity gradually increases, whereby curing will be completed in a long time. Namely, the pot life is very short, whereby the operation efficiency deteriorates, and at the same time, the viscosity increase is slow, and the curing time is long, whereby the production efficiency substantially deteriorates, such being not practical. Further, if the bicyclic tertiary amine of the above formula (1) is used alone i.e. not in the form of a salt with an aliphatic monocarboxylic acid having at least one unsaturated bond in its molecule, the storage stability is poor, and it tends to undergo decomposition, such being not practical. Further, it will be difficult to satisfy both the long pot life and the rapid viscosity increase.

In the present invention, the aliphatic monocarboxylic acid having at least one unsaturated bond in its molecule, selected from the group consisting of methacrylic, crotonic acid and tiglic acid.

The above aliphatic monocarboxylic acids may be used alone or in combination of two or more of them.

With a salt of the bicyclic tertiary amine of the above formula (1) with an aliphatic saturated monocarboxylic acid having no unsaturated bond in its molecule i.e. not the aliphatic monocarboxylic acid having at least one unsaturated bond in its molecule, it may be possible to obtain a pot life of a certain length and a rapid viscosity increase, but it is difficult to obtain a pot life of a sufficiently long period of time. Namely, it is difficult to control the pot life. Further, with a salt of the bicyclic tertiary amine of the above formula (1) with an unsaturated dicarboxylic acid or with an aromatic carboxylic acid, it is difficult to accelerate the urethane-forming reaction for curing.

Namely, only the salt of the bicyclic tertiary amine of the above formula (1) with the aliphatic monocarboxylic acid having at least one unsaturated bond in its molecule as defined above is capable of satisfying both the long pot life and the rapid viscosity increase, required for a two component urethane sealant.

In the present invention, the aliphatic monocarboxylic acid salt of the bicyclic tertiary amine to be used as a catalyst, is solid in many cases, and it is preferably employed in the form of a liquid, as dissolved in a solvent. The solvent is not particularly limited, and it may, for example, be ethylene glycol, diethylene glycol, dipropylene glycol, propylene glycol or butanediol. Among them, ethylene glycol and diethylene glycol are preferred. The amount of the solvent is not particularly limited. However, it is usually preferred to adjust it so that the weight ratio of the catalyst will be from 10 to 80%.

In the present invention, the blend ratio of the bicyclic tertiary amine and the aliphatic monocarboxylic acid is important, and the blend ratio is adjusted so that the molar ratio of the bicyclic tertiary amine/the aliphatic monocarboxylic acid will be at most 1.3, more preferably from 0.7 to 1.2. If the blend ratio is adjusted so that the molar ratio exceeds 1.3, i.e. if the ratio of the aliphatic monocarboxylic acid is low, the proportion of blocking by the acid becomes small, and the bicyclic tertiary amine acting as the catalyst becomes large, whereby the urethane forming reaction starts to proceed earlier than the prescribed timing, whereby the pot life becomes short. Further, depending upon the required length of the pot life, the proportion of the aliphatic monocarboxylic acid to be mixed, may be suitably adjusted. However, in order to control the pot life, the molar ratio of the bicyclic tertiary amine/the aliphatic monocarboxylic acid is preferably at least 0.7.

In the method of the present invention, at the time of producing a polyurethane by reacting a polyol with an organic polyisocyanate and/or an isocyanate prepolymer in the presence of a catalyst and, if necessary, zeolite, a cross-linking agent, etc., as the catalyst, the above-mentioned catalyst for production of a two component polyurethane sealant of the present invention, is employed.

When the catalyst of the present invention is used for the production of a two component polyurethane sealant, it is possible to satisfy both the long pot life and the rapid viscosity increase. The amount of the catalyst is usually from 0.0001 to 10 parts by weight, preferably from 0.01 to 5 parts by weight, per 100 parts by weight of the polyol to be used.

In the production method of the present invention, the aliphatic unsaturated monocarboxylic acid salt of the bicyclic tertiary amine and an organic metal catalyst may be used in combination. The organic metal catalyst may, for example, be stannous diacetate, stannous dioctoate, stannous dioleate, stannous dilaurate, dibutyltin oxide, dibutyltin diacetate, dibutyltin dilaurate, dibutyltin dichloride, dioctyltin dilaurate, nickel octylate, nickel naphthenate, cobalt octylate, cobalt naphthenate, bismuth octylate or bismuth naphthenate. A preferred compound among them is an organic tin catalyst. Particularly preferred is stannous dioctoate or dibutyltin dilaurate. When an organic metal catalyst is used in the present invention, the amount thereof is usually from 0.0001 to 5 parts by weight, preferably from 0.001 to 3 parts by weight, per 100 parts by weight of the polyol.

The catalyst of the present invention can be used for all two component polyurethane sealant formulations.

The polyol to be used for the method of the present invention, may, for example, be a conventional polyether polyol, polyester polyol, polymer polyol and a flame retardant polyol such as a phosphorus-containing polyol or a halogen-containing polyol. These polyols may be used alone or in combination as a mixture.

The polyether polyol may be produced by using, as a starting material, a compound having at least two active hydrogen groups, such as a polyhydric alcohol such as ethylene glycol, propylene glycol, glycerol, trimethylolpropane or pentaerythritol, an amine such as ethylene diamine, or an alkanolamine such as ethanolamine or diethanolamine, and subjecting such a starting material to an addition reaction with an alkylene oxide such as ethylene oxide or propylene oxide, for example, by a method disclosed by Gunter Oertel, "Polyurethane Handbook" (1985) Hanser Publishers (Germany), p.42-53.

The polyester polyol may, for example, be a polyester polyol obtained by treating a waste or a waste product of a phthalic acid type polyester, a waste of pentaerythritol, TMP, a waste from the production of nylon as disclosed by Keiji Iwata "Polyurethane Resin Handbook" (1987), published by Nikkan Kogyo Shinbunsha, p.117.

The polymer polyol may, for example, be a polymer polyol disclosed, for example, by Gunter Oertel, "Polyurethane Handbook" (1985) Hanser Publishers (Germany), p.75-76, obtained by reacting e.g. the polyol with an ethylenic unsaturated monomer such as butadiene, acrylonitrile or styrene, in the presence of a radical polymerization catalyst.

Among these polyols, particularly preferred are a bifunctional polyether polyol and polyester polyol.

Particularly preferred as such a polyol, is a polyol obtained by using polyoxypropylene glycol as the starting material.

The polyisocyanate to be used in the present invention may be a known organic polyisocyanate. In addition to a polyisocyanate monomer, its polymeric product may also be used. The polyisocyanate monomer may, for example, be an aromatic polyisocyanate such as toluene diisocyanate (TDI), 4,4'-diphenylmethane diisocyanate (MDI), 4,4'-diphenylether diisocyanate, naphthalene diisocyanate, xylene-1,3-diisocyanate, xylene-1,4-diisocyanate, 2-nitrodiphenyl-4,4'-diisocyanate or xylylene diisocyanate, an aliphatic polyisocyanate such as hexamethylene diisocyanate, an alicyclic polyisocyanate such as dicyclohexyl diisocyanate or isophorone diisocyanate, or a mixture thereof. As TDI or its derivative, a mixture of 2,4-toluene diisocyanate and 2,6-toluene diisocyanate, or a terminal isocyanate prepolymer derivative of TDI, may be mentioned. As MDI or its derivative, a mixture of MDI and its polymer i.e. a polyphenyl-polymethylene diisocyanate, and/or a terminal isocyanate group-containing diphenylmethane diisocyanate derivative, may be mentioned. Particularly preferred for the production of a two component urethane sealant, are TDI and MDI.

In the present invention, instead of the isocyanate, a urethane prepolymer may be used. The urethane prepolymer can be produced by reacting the above-described polyol with the polyisocyanate. The reaction is preferably carried out at a high temperature. For example, it is preferred to carry out the reaction within a range of from 60°C to 150°C. The equivalent ratio of the polyisocyanate to the polyol is preferably set to be within a range of from about 0.8 to about 3.5.

In the present invention, an amine curing agent may be employed in order to increase the curing property. The amine curing agent may, for example, be ethylenediamine, diethylenetriamine, triethylenetetramine, hexamethylenepentamine, bisaminopropylpiperazine, tris(2-aminoethyl)amine or isophoronediamine.

The isocyanate index of the present invention is not particularly limited, but it is usually within a range of from 70 to 250.

In the present invention, a cross-linking agent or a chain extender may be incorporated, as the case requires. As the cross-linking agent or the chain extender, a polyhydric alcohol having a low molecular weight (such as ethylene glycol, 1,4-butanediol, 1,3-butanediol or glycerol), an amine polyol having a low molecular weight (such as diethanolamine or triethanolamine) or a polyamine (such as ethylene diamine, xylylene diamine or methylene bisorthochloroaniline) may, for example, be mentioned. Among them, ethylene glycol, 1,4-butanediol or 1,3-butanediol is preferred.

In the present invention, it is preferred to remove water, since if water is present in the system, a foaming phenomenon is likely to take place during the reaction, or the catalytic activity tends to decrease. For the removal of water, it is preferred not only to carry out vacuum dehydration under heating of the starting materials such as the polyol, prepolymer, etc. but also to add a molecular sieve, zeolite or the like into the system.

Further, a coloring agent, a flame retardant, an aging-preventive agent, a filler, a thickening agent, a plasticizer, an UV absorber, a solvent, a thixotropic agent or other known additives may also be used, as the case requires. The types and the amounts of such additives may usually be within the commonly employed ranges so long as they will not depart from known manners and procedures.

Now, the present invention will be described in further detail with reference to Examples and Comparative Examples. However, it should be understood that the present invention is by no means restricted to such specific Examples.

### Preparation of catalysts

### EXAMPLE 1

Into a 500 ml round-bottomed flask made of glass and equipped with a stirrer, predetermined amounts of acrylic acid and diethylene glycol as an organic solvent, were charged, and a predetermined amount of DBU was gradually dropwise added, followed by stirring and mixing in a nitrogen atmosphere. The stirring and mixing were carried out till complete dissolution to obtain a liquid catalyst comprising DBU and an organic carboxylic acid (catalyst identification: DBU-A).

### EXAMPLE 2

A liquid catalyst comprising DBU and an organic carboxylic acid was prepared in the same manner as in Example 1 except that methacrylic acid was added as the organic carboxylic acid (catalyst identification: DBU-M).

### EXAMPLE 3

A liquid catalyst comprising DBU and an organic carboxylic acid was prepared in the same manner as in Example 1 except that crotonic acid was added as the organic carboxylic acid (catalyst identification: DBU-K).

### EXAMPLE 4

A liquid catalyst comprising DBU and an organic carboxylic acid was prepared in the same manner as in Example 1 except that tiglic acid was added as the organic carboxylic acid (catalyst identification: DBU-T).

### EXAMPLE 5

Into a 500 ml round bottomed flask made of glass and equipped with a stirrer, predetermined amounts of acrylic acid and diethylene glycol as an organic solvent, were charged, and a predetermined amount of DBN was gradually dropwise added, followed by stirring and mixing in a nitrogen atmosphere. The stirring and mixing were carried out till complete dissolution to obtain a liquid catalyst comprising DBN and the organic carboxylic acid (catalyst identification: DBN-A).

### EXAMPLE 6

Into a 500 ml round bottomed flask made of glass and equipped with a stirrer, predetermined amounts of acrylic acid and diethylene glycol as an organic solvent, were charged, and a predetermined amount of DBD was gradually dropwise added, followed by stirring and.mixing in a nitrogen atmosphere. The stirring and mixing were carried out till complete dissolution to obtain a liquid catalyst comprising DBD and the organic carboxylic acid (catalyst identification: DBD-A).

### MODIFIED EXAMPLE 1

A liquid catalyst comprising DBU and an organic carboxylic acid was prepared in the same manner as in Example 1 except that the ratio of DBU and the organic carboxylic acid was changed (catalyst identification: DBU-A2).

### MODIFIED EXAMPLE 2

Into a 500 ml round bottomed flask made of glass and equipped with a stirrer, predetermined amounts of formic acid and diethylene glycol as an organic solvent, were charged, and a predetermined amount of DBU was gradually dropwise added, followed by stirring and mixing in a nitrogen atmosphere. The stirring and mixing were carried out till complete dissolution to obtain a liquid catalyst comprising DBU and the organic carboxylic acid (catalyst identification: DBU-F).

### MODIFIED EXAMPLE 3

Into a 500 ml round bottomed flask made of glass and equipped with a stirrer, predetermined amounts of 2-ethylhexanoic acid and diethylene glycol as an organic solvent, were charged, and a predetermined amount of DBU was gradually dropwise added, followed by stirring and mixing in a nitrogen atmosphere. The stirring and mixing were carried out till complete dissolution to obtain a liquid catalyst comprising DBU and the organic carboxylic acid (catalyst identification: DBU-EH).

### MODIFIED EXAMPLE 4

Into a 500 ml round bottomed flask made of glass and equipped with a stirrer, predetermined amounts of p-toluenesulfonic acid and diethylene glycol as an organic solvent, were charged, and a predetermined amount of DBU was gradually dropwise added, followed by stirring and mixing in a nitrogen atmosphere. The stirring and mixing were carried out till complete dissolution to obtain a liquid catalyst comprising DBU and the organic carboxylic acid (catalyst identification: DBU-S).

### MODIFIED EXAMPLE 5

Into a 500 ml round bottomed flask made of glass and equipped with a stirrer, predetermined amounts of fumaric acid and diethylene glycol as an organic solvent, were charged, and a predetermined amount of DBU was gradually dropwise added, followed by stirring and mixing in a nitrogen atmosphere. The stirring and mixing were carried out till complete dissolution to obtain a liquid catalyst comprising DBU and the organic carboxylic acid (catalyst identification: DBU-FM).

### MODIFIED EXAMPLE 6

Into a 500 ml round bottomed flask made of glass and equipped with a stirrer, a predetermined amount of phenol was charged, and a predetermined amount of DBU was gradually dropwise added, followed by stirring and mixing in a nitrogen atmosphere. The stirring and mixing were carried out till complete dissolution to obtain a liquid catalyst comprising DBU and phenol (catalyst identification: DBU-Ph).

The compositions and the catalyst identifications of the prepared catalysts are shown in Tables 1 and 2.

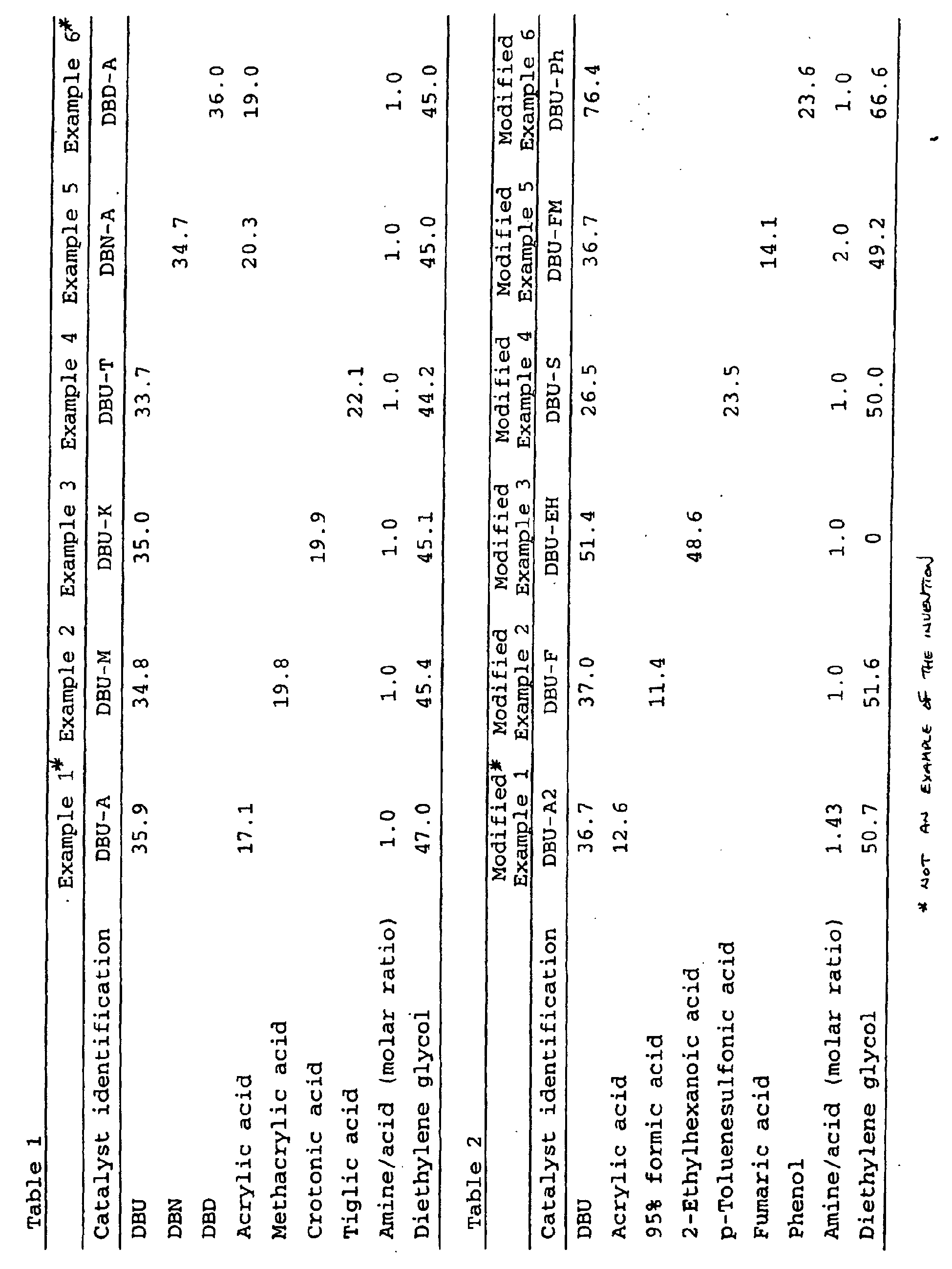

### BRIEF DESCRIPTION OF THE DRAWINGS

Fig. 1 is a graph showing the results (the viscosity increasing profile) of Example 7.
Fig. 2 is a graph showing the results (the viscosity increasing profile) of Example 8.
Fig. 3 is a graph showing the results (the viscosity increasing profile) of Example 9.
Fig. 4 is a graph showing the results (the viscosity increasing profile) of Example 10.
Fig. 5 is a graph showing the results (the viscosity increasing profile) of Example 11.
Fig. 6 is a graph showing the results (the viscosity increasing profile) of Example 12
Fig. 7 is a graph showing the results (the viscosity increasing profile) of Comparative Example 1.
Fig. 8 is a graph showing the results (the viscosity increasing profile) of Comparative Example 2.
Fig. 9 is a graph showing the results (the viscosity increasing profile) of Comparative Example 3.
Fig. 10 is a graph showing the results (the viscosity increasing profile) of Comparative Example 4.
Fig. 11 is a graph showing the results (the viscosity increasing profile) of Comparative Example 5.
Fig. 12 is a graph showing the results (the viscosity increasing profile) of Comparative Example 6.
Fig. 13 is a graph showing the results (the viscosity increasing profile) of Comparative Example 7.
Fig. 14 is a graph showing the results (the viscosity increasing profile) of Comparative Example 8.

### Preparation of polyurethane sealants

### EXAMPLES 7 to 12

Preparation of polyurethane sealants was carried out by using the catalysts prepared in Examples 1 to 6, with a blend of the polyol and the isocyanate prepolymer as shown in Table 3 (isocyanate index=105) and by using the additive as shown in Table 3.

Table 3

| | |
|---|---|
| | pbw |
| Polyol ¹⁾ | 24 |
| Polyol ²⁾ | 72 |
| Zeolite 3A | 4 |
| Catalyst | Changed |
| Isocyanate prepolymer ³⁾ | Index=105 |

| | |
|---|---|
| 1) Polyether polyol HV=376 mgKOH/g | |
| 2) Polyether polyol HV=56 mgKOH/g | |
| 3) MDI base prepolymer NCO content=26.0% | |

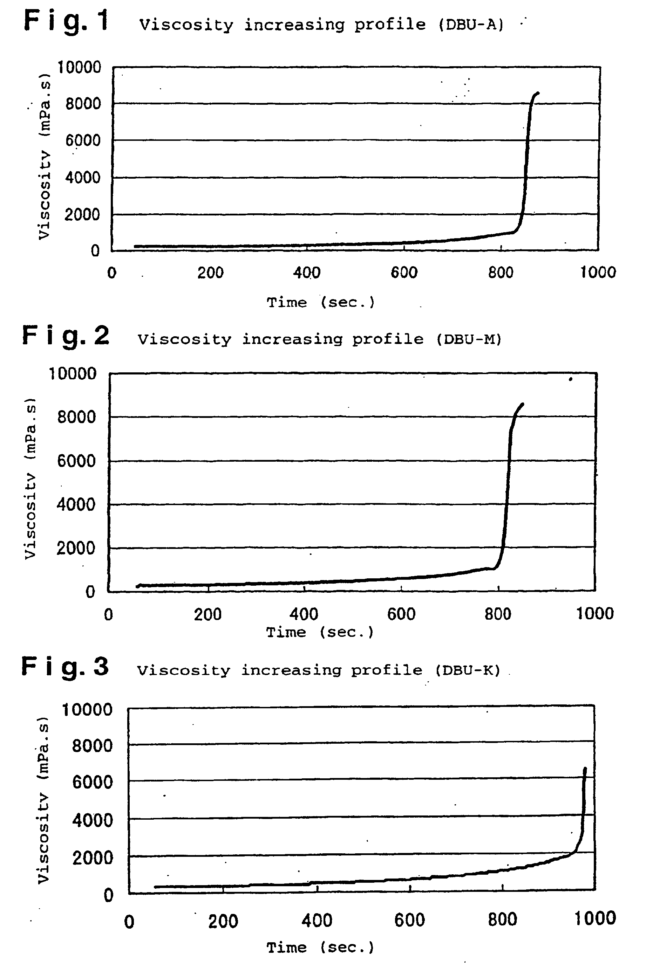

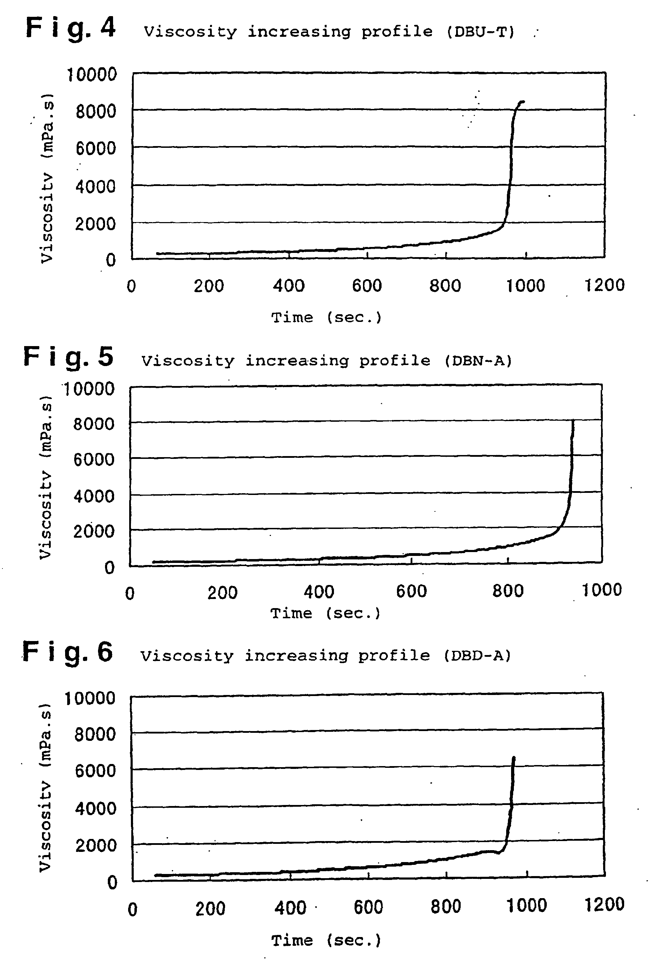

The reactivity of the polyurethane sealant (the pot life, the viscosity increasing profile), the reactivity of the catalyst and the foaming property of the polyurethane sealant, were measured and evaluated. The results of the evaluation are shown in Table 4 and Figs. 1 to 6.

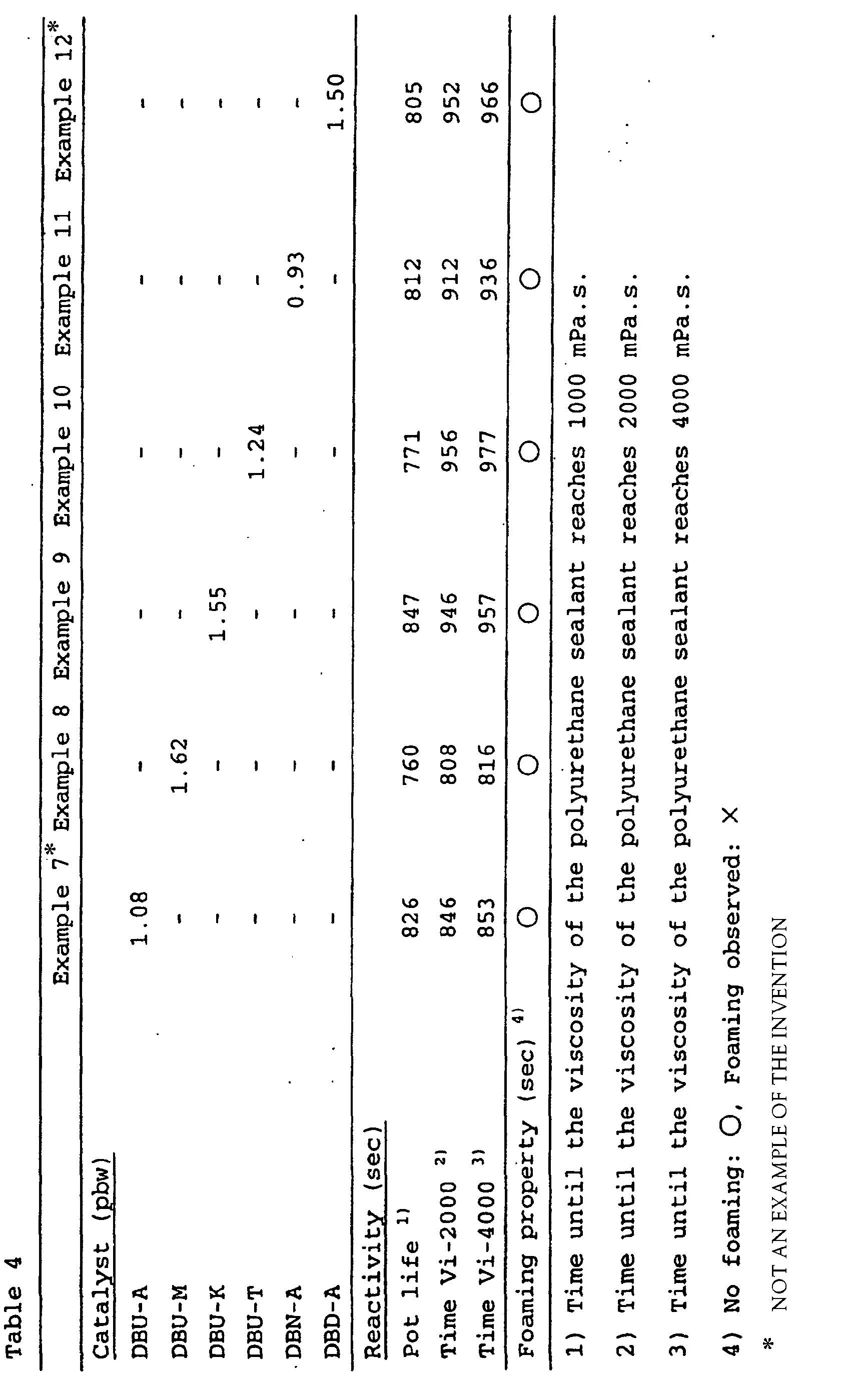

As is evident from these results, when the catalyst of the present invention is employed, it is possible to satisfy both the desired long pot life and the rapid viscosity increase.

### COMPARATIVE EXAMPLES 1 to 6

Preparation of polyurethane sealants was carried out by using the catalysts prepared in Modified Examples 1 to 6, with a blend of the polyol and the isocyanate prepolymer as shown in Table 3 (isocyanate index=105) and by using the additive as shown in Table 3.

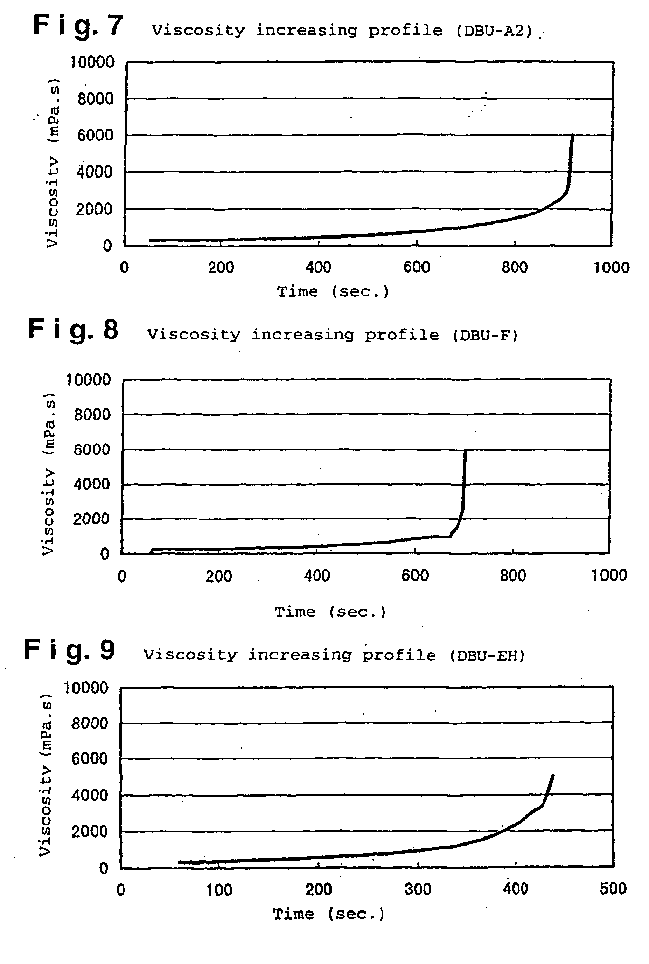

The reactivity of the polyurethane sealant (the pot life, the viscosity increasing profile), the reactivity of the catalyst and the foaming property of the polyurethane sealant, were measured and evaluated. The results of the evaluation are shown in Table 5 and Figs. 7 to 12.

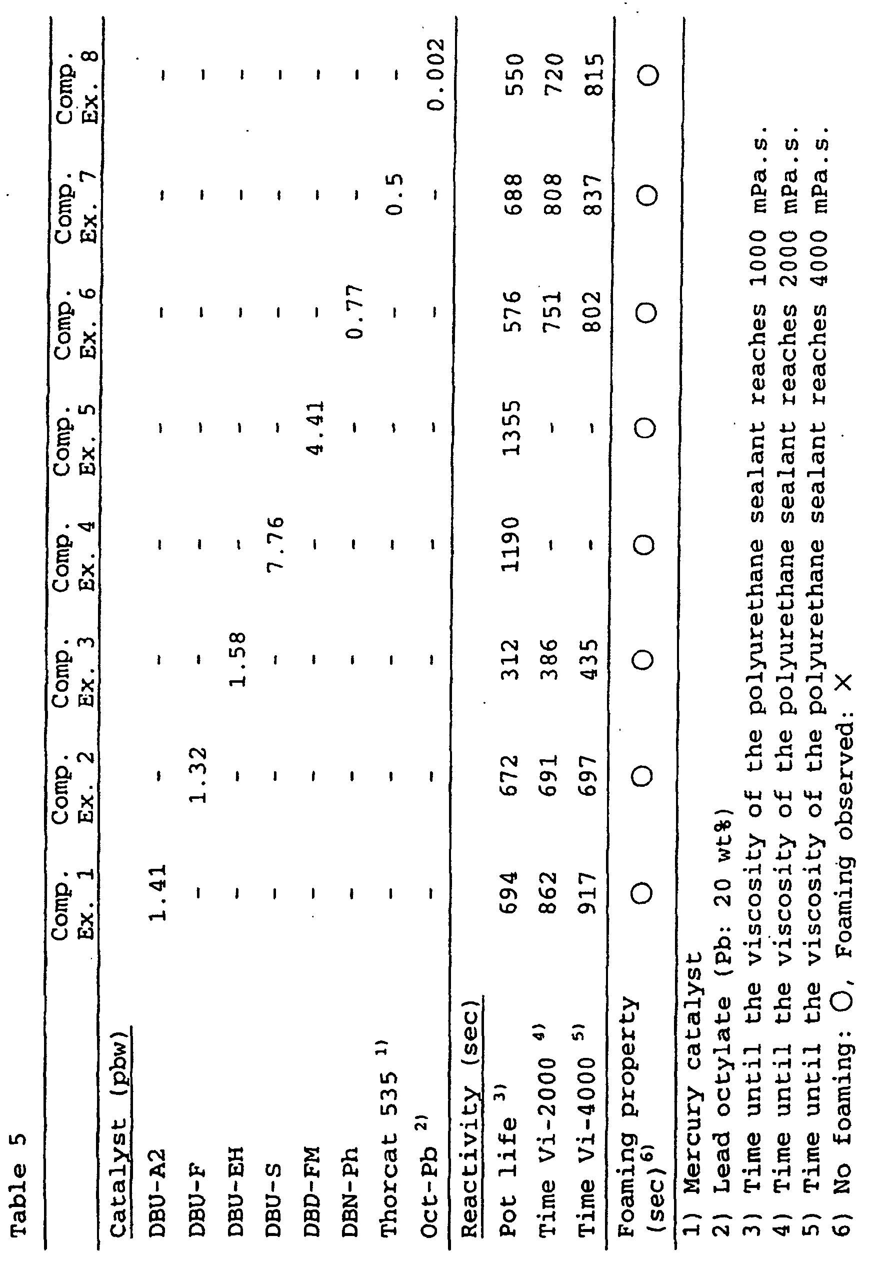

As is evident from Comparative Example 1 and Fig. 7, even when the acid of the present invention is used, if the ratio of the amine/the acid exceeds 1.3 by molar ratio, the rapid increase of the viscosity tends to be lost.

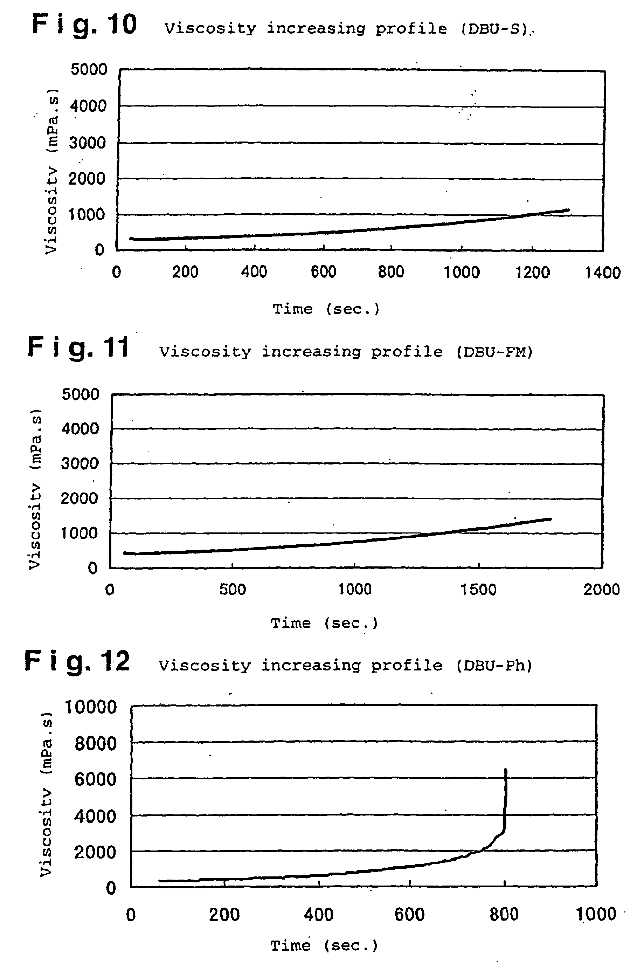

As is evident from Comparative Example 2 and Fig. 8, and from Comparative Example 6 and Fig. 12, when a catalyst having DBU blocked with formic acid or phenol, is used, it tends to be difficult to obtain a long pot life, although the rapid viscosity increase can be attained. Further, as is evident from Comparative Example 3 and Fig. 9, when 2-ethylhexanoic acid is used as the acid, the viscosity increase is not rapid, such being not practical. Namely, with an aliphatic monocarboxylic acid having no unsaturated bond in its molecule, it is impossible to satisfy both the long pot life and the rapid viscosity increase.

As is evident from Comparative Example 4 and Fig. 10, when p-toluenesulfonic acid is used as the acid, the viscosity increase hardly takes place even when a large amount of the catalyst is used, whereby no rapid increase of the viscosity is observed. Further, as is evident from Comparative Example 5 and Fig. 11, also in a case where a dicarboxylic acid used instead of a monocarboxylic acid, the viscosity increase is slow and is not practical, even if the acid has an unsaturated bond.

### COMPARATIVE EXAMPLES 7 and 8

Preparation of polyurethane sealants was carried out by using a mercury catalyst and a lead catalyst which are conventional heavy metal catalysts, with a blend of the polyol and the isocyanate prepolymer as shown in Table 3 (isocyanate index=105) and by using the additive as shown in Table 3.

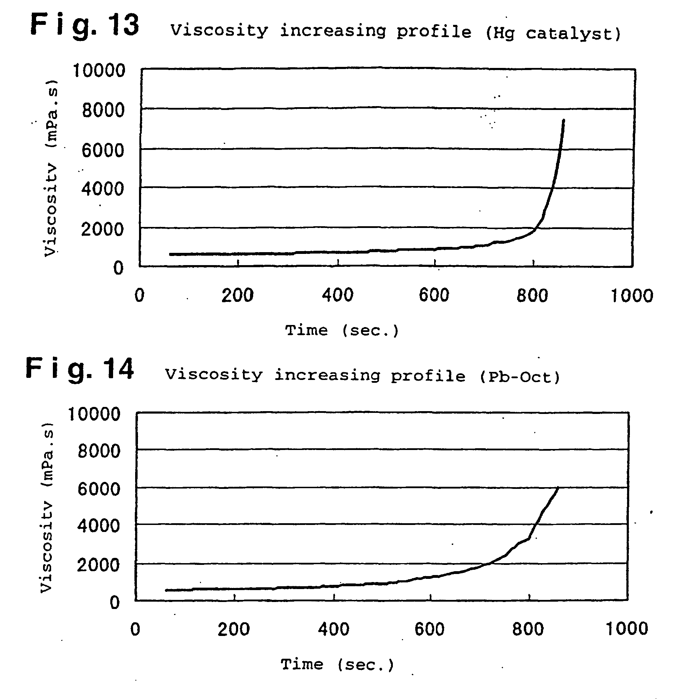

The reactivity of the polyurethane sealant (the pot life, the viscosity increasing profile), the reactivity of the catalyst and the foaming property of the polyurethane sealant, were measured and evaluated. The results of the evaluation are shown in Table 5 and Figs. 13 to 14.

As is evident from Comparative Example 8 and Fig. 14, when a lead catalyst is employed as a substitute for a mercury catalyst, the catalytic activity is very strong, but the viscosity increase is not rapid, whereby it is difficult to obtain the required pot life and the rapid viscosity increase.

As is evident from the foregoing results, by using the catalyst of the present invention, it is possible to satisfy both the long pot life and the rapid viscosity increase, in the same manner as is the mercury catalyst which used to be employed. Further, it should be readily understood that even if the bicyclic amidine catalyst is blocked with an acid other than the acid of the present invention, the long pot life can not be obtained, or the rapid viscosity increase can not be attained.

The catalyst of the present invention has a high temperature sensitivity and blocked with an acid to a proper extent, whereby the desired pot life and the rapid viscosity increase can be attained. Accordingly, the initial low viscosity state can be maintained for a prescribed period of time, and when the prescribed time expires, the viscosity increases quickly to complete the curing, whereby formation of defects in the product can be avoided, and the productivity will be improved substantially. Further, the catalyst of the present invention has an extremely low toxicity as compared with the conventional metal catalyst such as a mercury catalyst, and it can be used safely.

The entire disclosure of Japanese Patent Application No. 2000-318246 filed on October 13, 2000 including specification, claims, drawings and summary are incorporated herein by reference in its entirety.

## Claims

1. A catalyst for production of a two component polyurethane sealant, which comprises a salt of a bicyclic tertiary amine of the following formula (1): 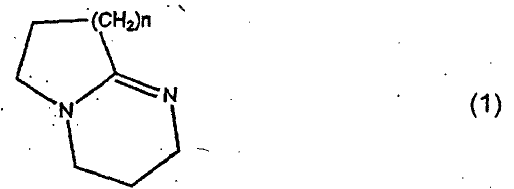
wherein n is an integer of from 1 to 3, with an aliphatic monocarboxylic acid having at least one unsaturated bond in its molecule selected from the group consisting of methacrylic acid, crotonic acid and tiglic acid, wherein the blend ratio is adjusted so that the molar ratio of the bicyclic tertiary amine/the aliphatic monocarboxylic acid is at most 1.3.

2. The catalyst according to claim 1, wherein the blend ratio is adjusted so that the molar ratio of the bicyclic tertiary amine/the aliphatic monocarboxylic acid is at least 0.7.

3. The catalyst according to claim 1 or 2, which comprises a salt of at least one bicyclic tertiary amine selected from the group consisting of 1,5-diaza-bicyclo(4,3,0)nonene-5, 1,5-diaza-bicyclo(4,4,0)decene-5 and 1,8-diaza-bicyclo(5,4,0)undecene-7

4. The catalyst for production of a two component polyurethane sealant according to anyone of claims 1 to 3, which comprises a salt of 1,8-diaza-bicyclo(5,4,0)-undecene-7 as a bicyclic tertiary amine.

5. A method for producing a two component polyurethane sealant, which comprises reacting a polyol with an organic polyisocyanate and/or an isocyanate prepolymer in the presence of a catalyst, wherein as the catalyst, the catalyst for production of a two component polyurethane sealant as defined in anyone of Claims 1 to 4 is used.

6. Use of a catalyst which comprises a salt of a bicyclic tertiary amine of the following formula (1) : 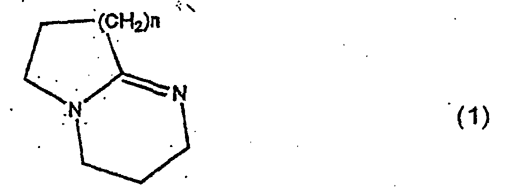 wherein n is an integer of from 1 to 3, with an aliphatic monocarboxylic acid having at least one unsaturated bond in its molecule selected from the group consisting of methacrylic acid, crotonic acid and tiglic acid, wherein the blend ratio is adjusted so that the molar ratio of the bicyclic tertiary amine/the aliphatic monocarboxylic acid is at most 1.3, for the production of a two component polyurethane sealant,

7. Use according to claim 6, wherein the blend ratio in the catalyst is adjusted so that the molar ratio of the bicyclic tertiary amine/the aliphatic monocarboxylic acid is at least 0.7.

8. Use according to claim 6 or 7, wherein the catalyst comprises a salt of at least one bicyclic tertiary amine selected from the group consisting of 1,5-diaza-bicyclo(4,3,0)nonene-5, 1,5-diaza-bicyclo(4,4,0)decene-5 and 1,8-diaza-bicyclo(5,4,0)undecene-7

9. Use according to anyone of claims 6 to 8, wherein the catalyst comprises a salt of 1,8-diaza-bicyclo(5,4,0)-undecene-7 as a bicyclic tertiary amine.

## Revendications

1. Catalyseur destiné à la fabrication d'un agent d'étanchéité de polyuréthane à deux composants, qui comprend un sel d'une amine tertiaire bicyclique selon la formule suivante (1) : 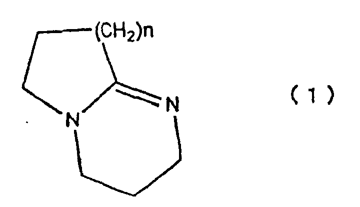 dans laquelle n est un nombre entier de 1 à 3 avec un acide monocarboxylique aliphatique comportant au moins une liaison insaturée dans sa molécule sélectionné parmi le groupe constitué de l'acide méthacrylique, de l'acide crotonique et de l'acide tiglique, dans lequel le rapport de mélange est ajusté de manière à ce que le rapport molaire de l'amine tertiaire bicyclique/1'acide monocarboxylique aliphatique soit au plus de 1,3.

2. Catalyseur selon la revendication 1, dans lequel le rapport de mélange est ajusté de manière à ce que le rapport molaire de l'amine tertiaire bicyclique/1'acide monocarboxylique aliphatique soit au moins de 0,7.

3. Catalyseur selon la revendication 1 ou 2, qui comprend un sel d'au moins une amine tertiaire bicyclique choisie parmi le groupe constitué du 1,5-diaza-bicyclo(4,3,0)nonène-5, du 1,5-diaza-bicyclo(4,4,0)décène-5 et du 1,8-diaza-bicyclo(5,4,0)undécène-7.

4. Catalyseur destiné à la fabrication d'un agent d'étanchéité de polyuréthane à deux composants selon l'une quelconque des revendications 1 à 3, qui comprend un sel de 1,8-diaza-bicyclo(5,4,0)-undécène-7 en tant qu'amine tertiaire bicyclique.

5. Procédé de fabrication d'un agent d'étanchéité de polyuréthane à deux composants, qui comprend la mise en réaction d'un polyol avec un polyisocyanate organique et/ou un prépolymère d'isocyanate en présence d'un catalyseur, dans lequel en tant que catalyseur, le catalyseur destiné à la fabrication d'un agent d'étanchéité de polyuréthane à deux composants tel que défini dans l'une quelconque des revendications 1 à 4 est utilisé.

6. Utilisation d'un catalyseur qui comprend un sel d'une amine tertiaire bicyclique selon la formule suivante (1) : 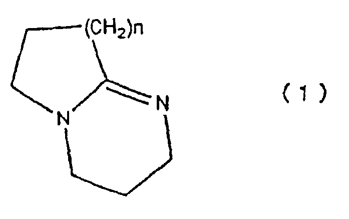
dans laquelle n est un nombre entier de 1 à 3, avec un acide monocarboxylique aliphatique comportant au moins une liaison insaturée dans sa molécule, choisi parmi le groupe constitué de l'acide méthacrylique, de l'acide crotonique et de l'acide tiglique, et dans lequel le rapport de mélange est ajusté de manière à ce que le rapport molaire de l'amine tertiaire bicyclique/l'acide monocarboxylique aliphatique soit au plus de 1,3, pour la fabrication d'un agent d'étanchéité de polyuréthane à deux composants.

7. Utilisation selon la revendication 6, dans lequel le rapport de mélange dans le catalyseur est ajusté de manière à ce que le rapport molaire de l'amine tertiaire bicyclique/l'acide monocarboxylique aliphatique soit au moins de 0,7.

8. Utilisation selon la revendication 6 ou 7, dans lequel le catalyseur comprend un sel d'au moins une amine tertiaire bicyclique choisie parmi le groupe constitué du 1,5-diaza-bicyclo(4,3,0)nonène-5, du 1,5-diazo-bicyclo(4,4,0)décène-5 et du 1,8-diaza-bicyclo(5,4,0)undécène-7.

9. Utilisation selon l'une quelconque des revendications 6 à 8, dans lequel le catalyseur comprend un sel de 1,8-diaza-bicyclo(5,4,0)-undécène-7 en tant qu'amine tertiaire bicyclique.

## Patentansprüche

1. Katalysator für die Herstellung eines Zweikomponenten-Polyurethan-Dichtungsmaterials, der ein Salz eines bicyclischen tertiären Amins der folgenden Formel (1): 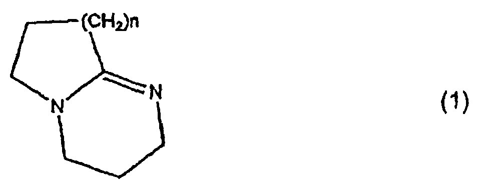
worin n eine ganze Zahl von 1 bis 3 ist, mit einer aliphatischen Monocarbonsäure umfasst, die zumindest eine ungesättige Bindung in ihrem Molekül hat und aus der Gruppe ausgewählt ist, die aus Methacrylsäure, Crotonsäure und Tiglinsäure besteht, wobei das Mischungsverhältnis so eingestellt wird, dass das Molverhältnis des bicyclischen tertiären Amins zur aliphatischen Monocarbonsäure höchstens 1,3 beträgt.

2. Katalysator nach Anspruch 1, **dadurch gekennzeichnet, dass** das Mischverhältnis so eingestellt wird, dass das Molverhältnis des bicyclischen tertiären Amins zur aliphatischen Monocarbonsäure mindestens 0,7 beträgt.

3. Katalysator nach Anspruch 1 oder 2, der ein Salz von zumindest einem bicyclischen tertiären Amin umfasst, das aus der Gruppe ausgewählt ist, die aus 1,5-Diaza-bicyclo[4.3.0]non-5-en, 1,5-Diazabicyclo[4.4.0]dec-5-en und 1,8-Diazabicyclo[5.4.0]undec-7-en besteht.

4. Katalysator für die Herstellung eines Zweikomponenten-Polyurethan-Dichtungsmaterials nach einem der Ansprüche 1 bis 3, der ein Salz von 1,8-Diazabicyclo[5.4.0]undec-7-en als eines bicyclischen tertiären Amins umfasst.

5. Verfahren zur Herstellung eines Zweikomponenten-Polyurethan-Dichtungsmaterials, das umfasst, ein Polyol mit einem organischen Polyisocyanat und/oder einem Isocyanat-Prepolymer in Gegenwart eines Katalysators umzusetzen, **dadurch gekennzeichnet, dass** als Katalysator der Katalysator für die Herstellung eines Zweikomponenten-Polyurethan-Dichtungsmaterials verwendet wird, wie in einem der Ansprüche 1 bis 4 definiert.

6. Verwendung eines Katalysators, der ein Salz eines bicyclischen tertiären Amins der folgenden Formel (1): 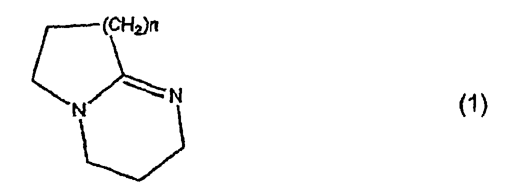
worin *n* eine ganze Zahl von 1 bis 3 ist, mit einer aliphatischen Monocarbonsäure umfasst, die zumindest eine ungesättige Bindung in ihrem Molekül hat und aus der Gruppe ausgewählt ist, die aus Methacrylsäure, Crotonsäure und Tiglinsäure besteht, wobei das Mischungsverhältnis so eingestellt wird, dass das Molverhältnis des bicyclischen tertiären Amins zur aliphatischen Monocarbonsäure höchstens 1,3 beträgt, zur Herstellung eines Zweikomponenten-Polyurethan-Dichtungsmaterials.

7. Verwendung nach Anspruch 6, **dadurch gekennzeichnet, dass** das Mischverhältnis im Katalysator so eingestellt wird, dass das Molverhältnis des bicyclischen tertiären Amins zur aliphatischen Monocarbonsäure mindestens 0,7 beträgt.

8. Verwendung nach Anspruch 6 oder 7, **dadurch gekennzeichnet, dass** der Katalysator ein Salz von zumindest einem bicyclischen tertiären Amin umfasst, das aus der Gruppe ausgewählt ist, die aus 1,5-Diazabicyclo[4.3.0]non-5-en, 1,5-Diazabicyclo[4.4.0]dec-5-en und 1,8-Diazabicyclo[5.4.0]undec-7-en besteht.

9. Verwendung nach einem der Ansprüche 6 bis 8, **dadurch gekennzeichnet, dass** der Katalysator ein Salz von 1,8-Diazabicyclo[5.4.0]undec-7-en als eines bicyclischen tertiären Amins umfasst.
